# EUROPEAN PATENT APPLICATION

(11) **EP 4 835 985 A1**
(43) Date of publication of application: **04.11.2026**
(21) Application number: 24912750.7
(22) Date of filing: 23.12.2024
(51) Int. Cl.: H01M 4/136, H01M 4/36, H01M 4/62

(54) **POSITIVE ELECTRODE MIXTURE**

(30) Priority: 27.12.2023 JP 2023220598
(71) Applicant: Idemitsu Kosan Co., Ltd., Tokyo 100-8321 (JP)
(72) Inventor: HANIU, Yamato, Tokyo 100-8321 (JP); NAKAMURA, Ikuko, Tokyo 100-8321 (JP)
(74) Representative: Vossius & Partner Patentanwälte Rechtsanwälte mbB
(86) International application number: PCT/JP2024/045522
(87) International publication number: WO 2025/142863

(57) **Abstract**

This positive electrode mixture comprises: a sulfur-based active material; a carbon material having pores; at least one of an ion conductor containing a phosphorus element and a modified body of the ion conductor; and a solid electrolyte. The rate of change in the element ratio C/P of carbon to phosphorus, as determined by surface element analysis using X-ray photoelectron spectroscopy before and after Ar sputtering treatment, is 0.365-1.00.

## Description

### Technical Field

The present invention relates to a positive electrode mixture. More specifically, the present invention relates to a positive electrode mixture that may be suitably used for a positive electrode of an all-solid-state lithium ion battery.

### Background Art

A high battery capacity is required in a lithium ion battery. To improve the battery capacity, a method including using sulfur for a positive electrode has been investigated because sulfur has a large theoretical capacity. However, when sulfur is used for the positive electrode, lithium ion conductivity and electron conductivity in the positive electrode need to be secured because sulfur has low lithium ion conductivity and low electron conductivity.

To solve the above-mentioned problem, a positive electrode mixture in which sulfur, a carbon material, phosphorus pentasulfide, a solid electrolyte, and the like are formed into a composite by mechanical milling with a planetary ball mill has been investigated (see, for example, Patent Literatures 1 and 2). In addition, a positive electrode mixture containing sulfur, a carbon material having pores, a solid electrolyte, and the like in which the solid electrolyte is arranged in pores of the carbon material from a solution state has been investigated (see, for example, Patent Literatures 3 and 4).

### Citation List

### Patent Literature

[PTL 1] JP 7156157 B2
[PTL 2] JP 6061139 B2
[PTL 3] JP 7283657 B2
[PTL 4] WO 2023/187466 A1

### Summary of Invention

It is required to further improve the charge-discharge characteristics of a lithium ion battery as compared to those of the related art. In such normal mixing by mechanical milling as disclosed in each of Patent Literatures 1 and 2, the formation of an interface between sulfur and a carbon material, and a solid electrolyte, phosphorus pentasulfide, or the like in a composite to be obtained is insufficient, and hence there has been a limitation on the formation of an ion conduction path to sulfur and the carbon material. In such method of precipitating a solid electrolyte from a solution as disclosed in each of Patent Literatures 3 and 4, the formation of an interface between sulfur and a carbon material, and the solid electrolyte in a composite to be obtained is insufficient, and hence there has been a limitation on the formation of an ion conduction path to sulfur and the carbon material.

An object of the present invention is to provide a positive electrode mixture capable of improving the charge-discharge characteristics of a lithium ion battery.

According to the present invention, there are provided the following positive electrode mixture and the like.
1. A positive electrode mixture including a sulfur-based active material; a carbon material having pores; at least one of an ion conductor containing a phosphorus element and a modified product of the ion conductor; and a solid electrolyte,
   wherein a rate of change in elemental ratio C/P of a carbon element to a phosphorus element by surface elemental analysis thereof in X-ray photoelectron spectroscopy before and after Ar sputtering treatment is 0.365 or more and 1.00 or less.
2. The positive electrode mixture according to Item 1, wherein the rate of change in elemental ratio C/P is 0.380 or more and 0.950 or less.
3. The positive electrode mixture according to Item 1 or 2, which has a peak having a peak top around 101.0 ppm in solid-state ³¹P-NMR measurement thereof.
4. The positive electrode mixture according to Item 1, wherein the ion conductor includes phosphorus sulfide, and
   a total area of peaks of P₂S₅, P₂S₆⁴⁻, and PS₃⁻ is 68% or less of an entirety in solid-state ³¹P-NMR measurement thereof.
5. The positive electrode mixture according to Item 1, wherein the ion conductor includes phosphorus sulfide, and
   an area of a peak of P₂S₇⁴⁻ is 23% or more of an entirety in solid-state ³¹P-NMR measurement thereof.
6. The positive electrode mixture according to any one of Items 1 to 5, wherein the ion conductor has a melting point of from 130°C to 450°C.
7. The positive electrode mixture according to any one of Items 1 to 6, wherein the ion conductor includes a lithium ion conductive material containing a phosphorus element, and one or more kinds of elements selected from lithium, boron, sulfur, and oxygen, or a precursor thereof.
8. The positive electrode mixture according to any one of Items 1 to 7, wherein the ion conductor includes phosphorus sulfide.
9. The positive electrode mixture according to any one of Items 1 to 8, wherein the ion conductor includes phosphorus pentasulfide.
10. The positive electrode mixture according to any one of Items 1 to 9, wherein the sulfur-based active material includes elemental sulfur.
11. The positive electrode mixture according to any one of Items 1 to 10, wherein a mass ratio of a total of the sulfur-based active material, and the ion conductor containing a phosphorus element and the modified product of the ion conductor is smaller than 5.00 to the carbon material.
12. A method of producing a positive electrode mixture including: mixing at least one of a composite or a mixture of a sulfur-based active material and a carbon material having pores with an ion conductor in a molten state to prepare a positive electrode mixture precursor; and
   mixing and pulverizing the positive electrode mixture precursor and a crystalline solid electrolyte under a condition where crystallinity of the solid electrolyte is reduced to advance amorphization thereof, to thereby produce the positive electrode mixture.
13. The method of producing it according to Item 12, wherein the composite of the sulfur-based active material and the carbon material having pores is mixed with the ion conductor in a molten state.
14. The method of producing it according to Item 12 or 13, wherein the ion conductor has a melting point of from 130°C to 450°C.
15. The method of producing it according to any one of Items 12 to 14, wherein the ion conductor includes a lithium ion conductive material containing a phosphorus element, and one or more kinds of elements selected from lithium, boron, sulfur, and oxygen, or a precursor thereof.
16. The method of producing it according to any one of Items 12 to 15, wherein the ion conductor is phosphorus sulfide.
17. The method of producing it according to any one of Items 12 to 16, wherein the ion conductor includes phosphorus pentasulfide.
18. The method of producing it according to any one of Items 12 to 17, wherein the sulfur-based active material includes elemental sulfur.
19. The method of producing it according to any one of Items 12 to 18, wherein a mass ratio among the sulfur-based active material, the carbon material, and the ion conductor satisfies the following relationship:$\left(sulfur-based active material+carbon material\right) : ion conductor = 50 : 1 to 80 .$
20. The method of producing it according to any one of Items 12 to 19, wherein a mass ratio of a total of the sulfur-based active material and the ion conductor is smaller than 5.00 to the carbon material.
21. A positive electrode including the positive electrode mixture according to any one of Items 1 to 11.
22. A lithium ion battery including the positive electrode mixture according to any one of Items 1 to 11, or the positive electrode according to Item 21.

The present invention can provide the positive electrode mixture capable of improving the charge-discharge characteristics of a lithium ion battery. In addition, the usage amount of a solid electrolyte, which is often produced by a complicated production process, can be reduced, and hence a reduction in cost can be expected.

### Brief Description of Drawings

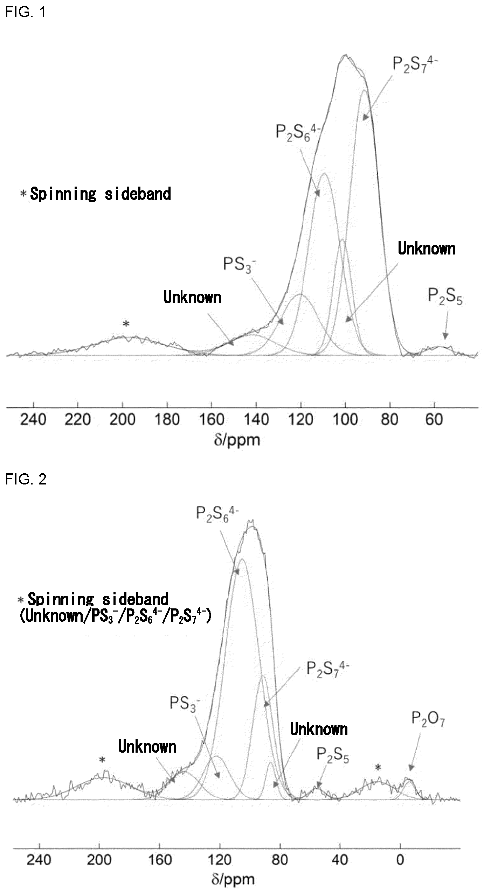

FIG. 1 is a result of the waveform separation of a solid-state ³¹P-NMR spectrum of Example 1.
FIG. 2 is a result of the waveform separation of a solid-state ³¹P-NMR spectrum of Comparative Example 2.

### Description of Embodiments

### 1. First Embodiment of Positive Electrode Mixture

A positive electrode mixture according to one embodiment of the present invention includes a sulfur-based active material; a carbon material having pores; at least one of an ion conductor containing a phosphorus element and a modified product of the ion conductor; and a solid electrolyte. In addition, the rate of change in elemental ratio C/P of a carbon element to a phosphorus element by its surface elemental analysis in X-ray photoelectron spectroscopy before and after Ar sputtering treatment is 0.365 or more and 1.00 or less.

The Ar sputtering treatment is treatment for etching the surface layer of the positive electrode mixture and measuring the internal state of the positive electrode mixture. The rate of change (R_{A}) in elemental ratio C/P indicates a change in elemental ratio between the outermost surface of the positive electrode mixture and the inside thereof, and is calculated from the following equation.${R}_{A} = \left(elemental ratio C/P inside\right) / \left(elemental ratio C/P on surface\right)$

The fact that the ratio R_{A} is 1 means that elemental compositions inside, and on the surface of, the positive electrode mixture are equal, and indicates that as its difference from 1 increases, a difference in elemental composition between the inside and the surface increases. Owing to an influence of, for example, the sputtering rate of Ar sputtering, the elemental ratio C/P inside the positive electrode mixture tends to be smaller than that on the surface thereof. Meanwhile, as a property in the positive electrode mixture of this embodiment, phosphorus (P) tends to be unevenly distributed on the surface and carbon (C) tends to be unevenly distributed inside the positive electrode mixture. From a relationship between the influence of Ar sputtering and the property of the positive electrode mixture, in the positive electrode mixture of this embodiment, the rate of change (R_{A}) in elemental ratio C/P is 0.365 or more and 1.00 or less. The foregoing may indicate that the sulfur-based active material, the carbon material, and the ion conductor and the modified product of the ion conductor form an interface in a form different from conventional forms. As a result, ion conduction paths in the positive electrode mixture are efficiently formed, and hence a positive electrode mixture capable of improving the charge-discharge characteristics of a lithium ion battery is obtained.

The rate of change in elemental ratio C/P is preferably 0.380 or more and 0.950 or less, more preferably 0.395 or more and 0.900 or less, particularly preferably 0.410 or more and 0.800 or less.

Details of the measurement of the rate of change in elemental ratio C/P are as described in Examples.

The positive electrode mixture according to one embodiment of the present invention has a peak having a peak top around 101.0 ppm in its solid-state ³¹P-NMR measurement. The term "around" means that the position of a chemical shift may slightly vary depending on a measurement device or the like, and means, for example, the range of ±2 ppm. The state of a phosphorus element near the surface of the positive electrode mixture may be identified by the solid-state ³¹P-NMR measurement. The peak around 101.0 ppm is a new peak having an intermediate chemical shift between P₂S₆⁴⁻ and P₂S₇⁴⁻. The peak is observed in this embodiment probably because the sulfur-based active material, the carbon material, and the ion conductor and the modified product of the ion conductor form an interface in a form different from conventional forms.

For a similar reason, in the positive electrode mixture according to one embodiment of the present invention, the ion conductor includes phosphorus sulfide, and the total area of the peaks of P₂S₅, P₂S₆⁴⁻, and PS₃⁻ is 68% or less of the entirety in the solid-state ³¹P-NMR measurement of the positive electrode mixture. The foregoing indicates that in this embodiment, the sulfur-based active material, the carbon material, and the ion conductor and the modified product of the ion conductor form an interface in a form different from conventional forms.

In addition, in the positive electrode mixture according to one embodiment of the present invention, the ion conductor includes phosphorus sulfide, and the area of the peak of P₂S₇⁴⁻ is 23% or more of the entirety in the solid-state ³¹P-NMR measurement of the positive electrode mixture. The foregoing shows that in this embodiment, the sulfur-based active material, the carbon material, and the ion conductor and the modified product of the ion conductor form an interface in a form different from conventional forms.

Details of the solid-state ³¹P-NMR measurement are as described in Examples.

In one embodiment, the solid electrolyte in the positive electrode mixture is amorphous or low crystalline. The fact that the solid electrolyte is amorphous or low crystalline means that its crystallite size calculated from a peak of X-ray diffraction measurement is 65 nm or less.

In one embodiment, the mass ratio of the total of the sulfur-based active material (S), and the ion conductor containing a phosphorus element and the modified product of the ion conductor is smaller than 5.00 to the carbon material (C). For example, when the ion conductor is phosphorus pentasulfide, the mass ratio [(S+P₂S₅)/C] is smaller than 5.00. When the mass ratio is less than 5.00, the charge-discharge characteristics of a lithium ion battery are further improved. The above-mentioned mass ratio may be 4.80 or less, 4.50 or less, 4.30 or less, 4.00 or less, 3.70 or less, or 3.50 or less.

The above-mentioned mass ratio may be adjusted by the blending amount of each constituent material.

### 2. Method of producing Positive Electrode Mixture

The positive electrode mixture of this embodiment may be produced, for example, by a method of the present invention including the following steps:
Step (A): mixing at least one of a composite or a mixture of a sulfur-based active material and a carbon material having pores with an ion conductor in a molten state to prepare a positive electrode mixture precursor; and
Step (B): mixing and pulverizing the positive electrode mixture precursor of the step (A) and a solid electrolyte to produce a positive electrode mixture.

In one embodiment, the positive electrode mixture is obtained by the production method of the present invention. The positive electrode mixture precursor and the method of producing the positive electrode mixture are described below.

### [Step (A)]

In the step (A), at least one of the composite or mixture of the sulfur-based active material and the carbon material having pores is mixed with the ion conductor in a molten state to prepare the positive electrode mixture precursor.

Although the sulfur-based active material is not particularly limited, examples thereof include sulfur, lithium sulfide (Li₂S), lithium polysulfide (Li₂Sₙ: "n" satisfies 1<n≤8), titanium sulfide (TiS₂), molybdenum sulfide (MoS₂), iron sulfide (FeS or FeS₂), copper sulfide (CuS), nickel sulfide (Ni₃S₂), and sulfur-containing polymer compounds. Of those, sulfur is preferred.

Although sulfur is not particularly limited, sulfur having as high a purity as possible is preferred. Specifically, the purity is preferably 95% by mass or more, more preferably 96% by mass or more, particularly preferably 97% by mass or more.

Examples of the crystal system of sulfur include α-sulfur (orthorhombic), β-sulfur (monoclinic), γ-sulfur (monoclinic), and amorphous sulfur. These may be used alone, or two or more kinds thereof may be used in combination.

A lithium ion conductive material containing a phosphorus element or a precursor thereof may be used as the ion conductor.

The lithium ion conductive material is, for example, a lithium ion conductive material containing one or more kinds of elements selected from lithium, boron, oxygen, sulfur, phosphorus, a halogen, and antimony, or a precursor thereof. The lithium ion conductive material is preferably a lithium ion conductive material containing a phosphorus element, and one or more kinds of elements selected from lithium, boron, sulfur, and oxygen, or a precursor thereof. A lithium ion conductive material containing no phosphorus element may be used in combination with the lithium ion conductive material containing a phosphorus element.

The term "lithium ion conductive material containing one or more kinds of elements selected from lithium, boron, oxygen, sulfur, phosphorus, a halogen, and antimony" as used herein means a material that maintains a solid state at 25°C under a nitrogen atmosphere and has an ionic conductivity resulting from a lithium ion. In addition, the term "precursor of a lithium ion conductive material containing one or more kinds of elements selected from lithium, boron, oxygen, phosphorus, a halogen, and antimony" means a material, which forms a compound containing lithium by reacting with lithium metal or a lithium ion when used as an active material of a lithium ion battery, and which becomes the above-mentioned lithium ion conductive material.

The term "halogen" as used herein means elements, such as fluorine, chlorine, bromine, and iodine.

The melting point of the ion conductor is preferably from 130°C to 450°C, more preferably from 220°C to 450°C because the ion conductor is turned into a melt by heating. In addition, the melting point of the ion conductor is preferably as low as possible, for example, 440°C or less, 430°C or less, 420°C or less, 410°C or less, or 400°C or less. Elemental sulfur, which is listed as an example of the sulfur-based active material, has a boiling point of about 450°C. It is conceivable that when elemental sulfur is mixed with a melt of a substance having a melting point equal to or more than the boiling point, elemental sulfur volatilizes to make it impossible to obtain a desired positive electrode mixture precursor. In addition, when a temperature in the step is lowered, energy at the time of the production of the positive electrode mixture precursor can be reduced, and the reduction leads to a reduction in cost.

Examples of the lithium ion conductive material include lithium borohydride, LiBF₄, an organic lithium salt, and a polymer electrolyte such as polyethylene oxide. In addition, examples of the precursor of the lithium ion conductive material include phosphorus sulfide such as phosphorus pentasulfide; red phosphorus; boron sulfide; phosphorus pentoxide; and tin. These compounds may be used alone, or two or more kinds thereof may be used in combination.

Examples of the organic lithium salt include lithium salts of bis(perfluoroalkylsulfonyl)imides, such as lithium bis(trifluoromethanesulfonyl)imide, lithium bis(fluorosulfonyl)imide, lithium (fluorosulfonyl)(trifluoromethanesulfonyl)imide, lithium bis(pentafluoroethanesulfonyl)imide, and lithium bis(nonafluorobutanesulfonyl)imide; lithium salts of perfluoroalkylsulfonimides such as a 4,4,5,5-tetrafluoro-1,3,2-dithiazolidine-1,1,3,3-tetraoxide lithium salt; lithium salts of fluorosulfonylimides; lithium trifluoromethanesulfonate; lithium salts of carboxylic acids, such as lithium acetate, lithium propionate, and lithium butyrate; lithium salts of organic sulfonic acids, such as lithium dodecylbenzenesulfonate and lithium p-styrenesulfonate; and lithium salts of organic phosphoric acids.

Each of those organic lithium salts is preferably used together with an ion conductive polymer or an ionic liquid. In this case, the impartment of higher lithium conductivity can be expected.

The ion conductor is preferably one or more compounds selected from the group consisting of phosphorus sulfide; red phosphorus; boron sulfide; phosphorus pentoxide; and a polymer electrolyte such as polyethylene oxide, the compounds being each substantially free of a lithium element. The ion conductor that is substantially free of a lithium element may have a high affinity for the sulfur-based active material or the carbon material.

The ion conductor is more preferably one or more compounds selected from the group consisting of phosphorus sulfide; red phosphorus; and phosphorus pentoxide.

Examples of phosphorus sulfide include phosphorus trisulfide (P₄S₃), phosphorus pentasulfide (P₂S₅), phosphorus heptasulfide (P₄S₇), and tetraphosphorus pentasulfide (P₄S₅). In addition, phosphorus sulfide may have a dimer or polysulfide structure, or may be a mixture thereof. The ion conductor is particularly preferably phosphorus pentasulfide, which is expected to react with lithium to form a sulfide solid electrolyte showing high ion conductivity.

The content of phosphorus sulfide or phosphorus pentasulfide with respect to the entirety of the ion conductor is 50% by mass or more, 80% by mass or more, 95% by mass or more, or 99% by mass or more, and is substantially 100% by mass. When the content is substantially 100% by mass, an unavoidable impurity may be included.

Examples of the carbon material having pores include carbon black, such as ketjen black, acetylene black, Denka black, thermal black, channel black, or CNovel (trademark); graphite; and activated carbon. These may be used alone, or two or more kinds thereof may be used in combination.

In one embodiment, the BET specific surface area of the carbon material is 50 m²/g or more and 6,000 m²/g or less. Thus, a wide contact interface between the carbon material and the sulfur-based active material can be formed, and hence the utilization ratio of the sulfur-based active material can be increased.

The BET specific surface area is 70 m²/g or more, 100 m²/g or more, 1,000 m²/g or more, 1,500 m²/g or more, 2,000 m²/g or more, 2,500 m²/g or more, or 3,000 m²/g or more. In addition, the BET specific surface area is preferably 5,500 m²/g or less, more preferably 5,000 m²/g or less.

In addition, the pore volume of the carbon material is 0.5 cm³/g or more and 6 cm³/g or less. Thus, pores of the carbon material can be impregnated with the sulfur-based active material, and hence the capacity of a battery can be further improved.

The pore volume is preferably 0.7 cm³/g or more, more preferably 1.0 cm³/g or more. In addition, the pore volume is preferably 5.5 cm³/g or less, more preferably 5.0 cm³/g or less.

In the present invention, the BET specific surface area and the pore volume may be determined by using a nitrogen adsorption isotherm obtained by causing the carbon material to adsorb a nitrogen gas under liquid nitrogen temperature. Specifically, the BET specific surface area may be calculated by the Brenauer-Emmet-Telle (BET) multi-point method through use of the nitrogen adsorption isotherm. In addition, the pore volume may be determined by the Barrett-Joyner-Halenda (BJH) method through use of the nitrogen adsorption isotherm.

Measurement may be performed by using, for example, a specific surface area/pore distribution-measuring apparatus (Autosorb-3) manufactured by Quantacrome Instruments as a measuring apparatus.

In the production method of this embodiment, at least one of the composite or mixture of the sulfur-based active material and the carbon material having pores described above is mixed with the ion conductor in a molten state. In one embodiment, the composite of the sulfur-based active material and the carbon material having pores is prepared in advance, and then the composite is mixed with the ion conductor in a molten state. Thus, the surface of the composite, that is, each of the top of the sulfur-based active material and the top of the carbon material is covered with the ion conductor, and hence an ion conduction path among the three materials is efficiently formed. Meanwhile, it is conceivable that even when the mixture of the sulfur-based active material and the carbon material having pores is mixed with the ion conductor in a molten state, the sulfur-based active material having a melting point lower than that of the ion conductor is melted first to produce the composite of the sulfur-based active material and the carbon material having pores, and then the ion conductor is melted to produce a similar structure.

In one embodiment, a mass ratio between the sulfur-based active material (S) and the carbon material (C) is from 1:9 to 9:1, preferably from 5:5 to 9:1.

A method of forming the composite of the sulfur-based active material and the carbon material having pores is not particularly limited. For example, the sulfur-based active material and the carbon material may be mixed and pulverized to be formed into a composite with a mixing pulverizer such as a planetary ball mill. Alternatively, the sulfur-based active material and the carbon material may be formed into a composite by being heated to a temperature equal to or more than the melting point of the sulfur-based active material in a sealed state.

The mixing of at least one of the composite or mixture of the sulfur-based active material and the carbon material having pores with the ion conductor in a molten state may be performed by heating at a temperature equal to or more than the melting point of the ion conductor. A heating temperature is adjusted in accordance with the ion conductor to be used. A substance having sublimability at normal pressure may be pressurized and mixed in a molten state. A heating time is preferably from 10 minutes to 24 hours.

The cooling of the mixture after the heating provides a positive electrode mixture precursor. A pulverization step may be performed after the cooling as required.

In one embodiment, a mass ratio among the sulfur-based active material, carbon material, and ion conductor of the positive electrode mixture precursor satisfies the following relationship:$\left(sulfur-based active material+carbon material\right) : ion conductor = 50 : 1 to 80 .$

It is preferably (sulfur-based active material+carbon material):ion conductor = 50:5 to 60.

In one embodiment, the mass ratio of the total of the sulfur-based active material (S) and the ion conductor is smaller than 5.00 to the carbon material (C). For example, when the ion conductor is phosphorus pentasulfide, the mass ratio [(S+P₂S₅)/C] is smaller than 5.00. When the mass ratio is less than 5.00, the charge-discharge characteristics of a lithium ion battery are further improved. The above-mentioned mass ratio may be 4.80 or less, 4.50 or less, 4.30 or less, 4.00 or less, 3.70 or less, or 3.50 or less. In addition, the above-mentioned mass ratio is 2.00 or more, 2.60 or more, or 3.20 or more.

The above-mentioned mass ratio may be adjusted by the blending amount of each constituent material.

### [Step (B)]

In the step (B), the positive electrode mixture precursor of the step (A) and the solid electrolyte are mixed and pulverized to produce the positive electrode mixture. Although the solid electrolyte is not particularly limited, the solid electrolyte is, for example, a sulfide solid electrolyte used in a lithium ion battery to be described later.

The mixing of the positive electrode mixture precursor and the solid electrolyte is not particularly limited, and may be adjusted in accordance with the characteristics of the solid electrolyte to be used. For example, when the solid electrolyte is crystalline and the maintenance of a crystal affects its performance, the mixing of the positive electrode mixture precursor and the solid electrolyte is performed with a relatively weak force.

A mixing apparatus for the positive electrode mixture precursor and the solid electrolyte is, for example, a planetary ball mill, a tumbling mill, a bead mill, Filmix, a Nauta mixer, a Tornado mixer, a twin-screw extruder, a multi-screw roller, or a solid-phase shear kneader.

In one embodiment, the solid electrolyte is a crystalline solid electrolyte, and the positive electrode mixture is produced by mixing and pulverizing its raw materials under a condition where the crystallinity of the solid electrolyte is reduced to advance its amorphization. In order to mix and pulverize the raw materials under the condition where the amorphization is advanced, for example, a device having a relatively large impact force such as a planetary ball mill only needs to be used. In addition, it is sufficient that conditions such as the number of revolutions be adjusted, and mixing and pulverizing be performed in a state of a higher load than usual. Whether or not the solid electrolyte is subjected to the amorphization may be recognized by, for example, the existence of a crystal peak and a change in full width at half maximum by X-ray diffraction measurement.

### 3. Lithium Ion Battery

A lithium ion battery according to one embodiment of the present invention includes the above-mentioned positive electrode mixture of the present invention. For example, an all-solid-state lithium ion battery may be produced by using a solid electrolyte instead of a liquid electrolyte. An all-solid-state lithium ion battery having satisfactory charge-discharge characteristics may be produced by using the positive electrode mixture of the present invention. The all-solid-state lithium ion battery is described below.

The all-solid-state lithium ion battery mainly includes a positive electrode layer, a negative electrode layer, and an electrolyte layer, and the positive electrode mixture of the present invention is suitable as a constituent material for the positive electrode layer. The negative electrode layer and the electrolyte layer may each be produced by a known method. In addition, a current collector is preferably used in addition to the positive electrode layer, the negative electrode layer, and the electrolyte layer, and a known current collector is used.

The solid electrolyte is not particularly limited, but is, for example, a sulfide solid electrolyte.

The sulfide solid electrolyte is a solid electrolyte that contains at least a sulfur atom and expresses an ion conductivity resulting from a metal ion therein. The electrolyte is a solid electrolyte that contains preferably a lithium atom and a phosphorus atom, more preferably a lithium atom, a phosphorus atom, and a halogen atom in addition to the sulfur atom, and has an ion conductivity resulting from the lithium atom.

The sulfide solid electrolyte may be an amorphous sulfide solid electrolyte, or may be a crystalline sulfide solid electrolyte.

### (Amorphous Sulfide Solid Electrolyte)

Any electrolyte may be adopted as the amorphous sulfide solid electrolyte without any particular limitation as long as the electrolyte contains at least a sulfur atom and expresses an ion conductivity resulting from a metal ion therein. Typical preferred examples thereof include a solid electrolyte containing a sulfur atom, a lithium atom, and a phosphorus atom, the electrolyte including lithium sulfide and phosphorus sulfide, such as Li₂S-P₂S₅; a solid electrolyte including lithium sulfide, phosphorus sulfide, and a lithium halide, such as Li₂S-P₂S₅-LiI, Li₂S-P₂S₅-LiCl, Li₂S-P₂S₅-LiBr, or Li₂S-P₂S₅-LiI-LiBr; and a solid electrolyte further containing any other element, such as an oxygen element or a silicon element, in addition to a sulfur element, such as Li₂S-P₂S₅-Li₂O-LiI or Li₂S-SiS₂-P₂S₅-LiI. From the viewpoint of obtaining a higher ion conductivity, a solid electrolyte including lithium sulfide, phosphorus sulfide, and a lithium halide, such as Li₂S-P₂S₅-LiI, Li₂S-P₂S₅-LiCl, Li₂S-P₂S₅-LiBr, or Li₂S-P₂S₅-LiI-LiBr, is preferred.

The kind of an element for forming the amorphous sulfide solid electrolyte may be identified with, for example, an ICP optical emission spectrometer.

When the amorphous sulfide solid electrolyte includes at least Li₂S-P₂S₅, a molar ratio between Li₂S and P₂S₅ is preferably 65 to 85:15 to 35, more preferably 70 to 80:20 to 30, still more preferably 72 to 78:22 to 28 from the viewpoint of obtaining high chemical stability and a higher ion conductivity.

When the amorphous sulfide solid electrolyte is, for example, Li₂S-P₂S₅-LiI-LiBr, the total of the contents of lithium sulfide and phosphorus pentasulfide is preferably from 60 mol% to 95 mol%, more preferably from 65 mol% to 90 mol%, still more preferably from 70 mol% to 85 mol%. In addition, the ratio of lithium bromide to the total of lithium bromide and lithium iodide is preferably from 1 mol% to 99 mol%, more preferably from 20 mol% to 90 mol%, still more preferably from 40 mol% to 80 mol%, particularly preferably from 50 mol% to 70 mol%.

When the amorphous sulfide solid electrolyte contains a lithium atom, a sulfur atom, a phosphorus atom, and a halogen atom, a blending ratio (molar ratio) among these atoms is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, still more preferably 1.2 to 1.6:1.3 to 1.7:0.25 to 0.5:0.08 to 0.4.

In addition, when bromine and iodine are used in combination as halogen atoms, a blending ratio (molar ratio) among the lithium atom, the sulfur atom, the phosphorus atom, a bromine atom, and an iodine atom is preferably 1.0 to 1.8:1.0 to 2.0:0.1 to 0.8:0.01 to 0.3:0.01 to 0.3, more preferably 1.1 to 1.7:1.2 to 1.8:0.2 to 0.6:0.02 to 0.25:0.02 to 0.25, more preferably 1.2 to 1.6:1.3 to 1.7:0.25 to 0.5:0.03 to 0.2:0.03 to 0.2, still more preferably 1.35 to 1.45:1.4 to 1.7:0.3 to 0.45:0.04 to 0.18:0.04 to 0.18. When the blending ratio (molar ratio) among the lithium atom, the sulfur atom, the phosphorus atom, and the halogen atoms is set within the above-mentioned ranges, it becomes easier to obtain a solid electrolyte having a higher ion conductivity, the electrolyte having a thio-LISICON Region II-type crystal structure to be described later.

In addition, although the shape of the amorphous sulfide solid electrolyte is not particularly limited, the shape may be, for example, a particulate shape. The average particle diameter (D₅₀) of a particulate amorphous sulfide solid electrolyte may fall within the range of, for example, from 0.01 µm to 500 µm, or from 0.1 µm to 200 µm.

The term "average particle diameter (D₅₀)" as used herein refers to a particle diameter defined as follows: when a particle diameter distribution cumulative curve is drawn, the numbers of particles are sequentially added up from the number of particles each having the smallest particle diameter; and the particle diameter at which the resultant value reaches 50% of the total number of the particles is defined as the average particle diameter. The term "volume distribution average particle diameter" refers to an average particle diameter that may be measured with, for example, a laser diffraction/scattering particle diameter distribution-measuring apparatus.

### (Crystalline Sulfide Solid Electrolyte)

The crystalline sulfide solid electrolyte may be, for example, a so-called glass ceramic obtained by heating the above-mentioned amorphous sulfide solid electrolyte to a temperature equal to or more than its crystallization temperature, and sulfide solid electrolytes having the following crystal structures may each be adopted.

A crystal structure that a crystalline sulfide solid electrolyte containing a lithium atom, a sulfur atom, and a phosphorus atom may have is, for example, a Li₃PS₄ crystal structure, a Li₄P₂S₆ crystal structure, a Li₇PS₆ crystal structure, a Li₇P₃S₁₁ crystal structure, or a crystal structure having peaks around Bragg angles 2θ of 20.2° and 23.6° (e.g., JP 2013-16423 A).

In addition, a crystal structure that a crystalline sulfide solid electrolyte containing a lithium atom, a sulfur atom, a phosphorus atom, and a halogen atom may have is, for example, a Li₄₋ₓGe₁₋ₓPₓS₄-based thio-LISICON Region II-type crystal structure (see Kanno et al., Journal of The Electrochemical Society, 148(7) A742-746 (2001)) or a crystal structure similar to the Li₄₋ₓGe₁₋ₓPₓS₄-based thio-LISICON Region II type (see Solid State Ionics, 177 (2006), 2721-2725)). The term "thio-LISICON Region II-type crystal structure" as used herein refers to any of a Li₄₋ₓGe₁₋ₓPₓS₄-based thio-LISICON Region II-type crystal structure and the crystal structure similar to the Li₄₋ₓGe₁₋ₓPₓS₄-based thio-LISICON Region II type.

In X-ray diffraction measurement with a CuKa ray, the diffraction peaks of the Li₃PS₄ crystal structure appear around, for example, Bragg angles 2θ of 17.5°, 18.3°, 26.1°, 27.3°, and 30.0°. The diffraction peaks of the Li₄P₂S₆ crystal structure appear near, for example, Bragg angles 2θ of 16.9°, 27.1°, and 32.5°. The diffraction peaks of the Li₇PS₆ crystal structure appear around, for example, Bragg angles 2θ of 15.3°, 25.2°, 29.6°, and 31.0°. The diffraction peaks of the Li₇P₃S₁₁ crystal structure appear around, for example, Bragg angles 2θ of 17.8°, 18.5°, 19.7°, 21.8°, 23.7°, 25.9°, 29.6°, and 30.0°. The diffraction peaks of the Li₄₋ₓGe₁₋ₓPₓS₄-based thio-LISICON Region II-type crystal structure appear around, for example, Bragg angles 2θ of 20.1°, 23.9°, and 29.5°. The diffraction peaks of the crystal structure similar to the Li₄₋ₓGe₁₋ₓPₓS₄-based thio-LISICON Region II type appear around, for example, Bragg angles 2θ of 20.2° and 23.6°. Those peak positions may each vary within the range of ±0.5°.

In addition, the crystal structure of the crystalline sulfide solid electrolyte is, for example, an argyrodite-type crystal structure. Examples of the argyrodite-type crystal structure include a Li₇PS₆ crystal structure; crystal structures represented by the composition formulae Li₇₋ₓP_{1-y}Si_{y}S₆ and Li₇₊ₓP_{1-y}Si_{y}S₆ ("x" represents from -0.6 to 0.6 and "y" represents from 0.1 to 0.6), the structures each having a Li₇PS₆ structural skeleton; a crystal structure represented by Li_{7-x-2y}PS_{6-x-y}Clₓ (0.8≤x≤1.7 and 0<y≤-0.25x+0.5); and a crystal structure represented by Li₇₋ₓPS₆₋ₓHaₓ (Ha represents Cl or Br, and "x" preferably represents from 0.2 to 1.8).

The crystal structure of the crystalline sulfide solid electrolyte is preferably the Li₃PS₄ crystal structure, the thio-LISICON Region II-type crystal structure, or the argyrodite-type crystal structure out of the above-mentioned crystal structures.

Although the shape of the crystalline sulfide solid electrolyte is not particularly limited, the shape may be, for example, a particulate shape. As in the average particle diameter (D₅₀) of the amorphous sulfide solid electrolyte described above, the average particle diameter (D₅₀) of a particulate crystalline sulfide solid electrolyte may fall within the range of, for example, from 0.01 µm to 500 µm, or from 0.1 µm to 200 µm.

### 4. Other Embodiments of Positive Electrode Mixture

The positive electrode mixture according to one embodiment of the present invention includes the sulfur-based active material, the carbon material having pores, at least one of the ion conductor and the modified product of the ion conductor, and the solid electrolyte, and
it has a peak having a peak top around 101.0 ppm in its solid-state ³¹P-NMR measurement.

The positive electrode mixture according to one embodiment of the present invention includes the sulfur-based active material, the carbon material having pores, at least one of the ion conductor and the modified product of the ion conductor, and the solid electrolyte,
the ion conductor includes phosphorus sulfide, and
the total of the areas of the peaks of P₂S₅, P₂S₆⁴⁻, and PS₃⁻ is 68% or less of the entirety in its solid-state ³1P-NMR measurement.

The positive electrode mixture according to one embodiment of the present invention includes the sulfur-based active material, the carbon material having pores, at least one of the ion conductor and the modified product of the ion conductor, and the solid electrolyte,
the ion conductor includes phosphorus sulfide, and
the area of the peak of P₂S₇⁴⁻ is 23% or more of the entirety in its solid-state ³¹P-NMR measurement.

Any of the positive electrode mixtures of the above-mentioned respective aspects is obtained, for example, by the above-mentioned production method of the present invention.

### Examples

### [Solid Electrolyte]

### Production Example 1 (Production of Solid Electrolyte A)

0.4398 g of lithium sulfide, 0.7084 g of phosphorus pentasulfide, 0.2133 g of lithium iodide, 0.1384 g of lithium bromide, and 10 zirconia-made balls each having a diameter of 10 mm were loaded into a 45 mL zirconia-made pot, and the pot was sealed. The materials were mixed (mechanically milled) with a planetary ball mill device (manufactured by Fritsch, model number: P-7) at a rotation speed of 370 rpm for 40 hours to provide powder. The resultant powder was heated at 195°C for 3 hours to provide a solid electrolyte A.

### Production Example 2 (Production of Solid Electrolyte B)

Lithium sulfide (Li₂S), phosphorus pentasulfide (P₂S₅), lithium bromide (LiBr), and lithium chloride (LiCl) were weighed so that their molar ratio "Li₂S:P₂S₅:LiBr:LiCl" became 47.5:12.5:15.0:25.0, followed by rough mixing under a nitrogen atmosphere.

The raw material mixture was dispersed in a mixed solvent, which had been obtained by adding 2% by mass of dehydrated isobutyronitrile with respect to the raw material mixture to dehydrated toluene, to prepare a slurry having a concentration of about 10% by mass.

A bead mill was operated under the conditions of a peripheral speed of 12 m/s and a flow rate of 500 mL/min, and the slurry was loaded into the mill, followed by a circulation operation for 1 hour. Thus, a mixture was obtained.

After the solvent of the resultant mixture had been removed, the residue was heated at from 400°C to 430°C for 2 hours in an electric furnace. After that, the heated product was slowly cooled to provide a raw material sulfide solid electrolyte.

Under a nitrogen atmosphere, the raw material sulfide solid electrolyte was dispersed in dehydrated toluene, and the dispersion was loaded into the zirconia-made pot of a planetary ball mill device (manufactured by Fritsch: model number: P-7) together with zirconia-made balls each having a diameter of 0.3 mm, followed by the establishment of an inert atmosphere in the pot. The resultant was treated for 2 hours at a number of revolutions of the planetary ball mill of 150 rpm to provide a slurry containing a finely pulverized sulfide solid electrolyte. After the slurry had been transferred to a Schlenk flask purged with nitrogen, the slurry was dried at room temperature for 1 hour with a vacuum pump, and was then heated to from 80°C to 100°C so that a solvent in the finely pulverized sulfide solid electrolyte was further removed (dried under reduced pressure). Thus, a solid electrolyte B was obtained.

### [Positive Electrode Mixture]

### Example 1

### (1) Production of Composite of Activated Carbon and Sulfur (S-C Composite)

Activated carbon (manufactured by Kansai Coke and Chemicals Co., Ltd., MSC-30SSS) and sulfur were loaded into a glass bottle at a weight ratio of 3:7, and were sealed in a SUS tube container. The mixture was heated in an electric furnace at 150°C for 6 hours and at 300°C for 2.75 hours to provide powder of a composite of activated carbon and sulfur.

### (2) Production of Positive Electrode Mixture Precursor

The powder of the composite obtained in the above-mentioned section (1) and phosphorus pentasulfide (manufactured by Italmatch Chemicals S.p.A, melting point: from 286°C to 290°C) were loaded into a Tammann tube having an inner diameter of 12 mm at a weight ratio of 0.7143:0.2857, and were sealed in a SUS tube container. The mixture was heated in an electric furnace at 350°C for 6 hours to provide a positive electrode mixture precursor.

### (3) Production of Positive Electrode Mixture

0.6300 g of the positive electrode mixture precursor of the above-mentioned section (2) and 0.2700 g of the solid electrolyte A were loaded into a 45 mL zirconia-made pot together with 10 zirconia-made balls each having a diameter of 10 mm, and the pot was sealed. The materials were mixed (mechanically milled) for 20 hours at room temperature and a rotation speed of 370 rpm with a planetary ball mill device (manufactured by Fritsch, model number: P-7) to provide positive electrode mixture powder.

### Example 2

A positive electrode mixture precursor was prepared in the same manner as in the section (2) of Example 1 except that the powder of the S-C composite obtained in the above-mentioned section (1) of Example 1 and phosphorus pentasulfide (manufactured by Italmatch Chemicals S.p.A, melting point: from 286°C to 290°C) were loaded into a Tammann tube having an inner diameter of 12 mm at a weight ratio of 0.8333:0.1667.

Positive electrode mixture powder was obtained in the same manner as in Example 1 except that 0.5400 g of the positive electrode mixture precursor and 0.3600 g of the solid electrolyte A were used.

### Example 3

Positive electrode mixture powder was obtained in the same manner as in Example 1 except that the solid electrolyte B was used instead of the solid electrolyte A in the section (3) of Example 1.

### Comparative Example 1

Positive electrode mixture powder was obtained by mixing 0.4500 g of the powder of the S-C composite obtained in the same manner as in the section (1) of Example 1 and 0.4500 g of the solid electrolyte A in the same manner as in the section (3) of Example 1.

### Comparative Example 2

Positive electrode mixture powder was obtained by mixing 0.4500 g of the powder of the S-C composite obtained in the same manner as in the section (1) of Example 1, 0.1800 g of phosphorus pentasulfide, and 0.2700 g of the solid electrolyte A in the same manner as in the section (3) of Example 1 so that a mass ratio among activated carbon, sulfur, and phosphorus pentasulfide became the same as that in Example 1.

### Comparative Example 3

Positive electrode mixture powder was obtained by mixing 0.4500 g of the powder of the composite obtained in the same manner as in the section (1) of Example 1, 0.0900 g of phosphorus pentasulfide, and 0.3600 g of the solid electrolyte A in the same manner as in the section (3) of Example 1 so that a mass ratio among activated carbon, sulfur, and phosphorus pentasulfide became the same as that in Example 2.

### [Evaluation]

The following evaluations were performed on each of the positive electrode mixtures produced in Examples and Comparative Examples.

### (1) X-ray Photoelectron Spectroscopy (XPS) measurement

### (a) XPS Measurement

In a glove box controlled to an Ar atmosphere having a dew point of -60°C or less, a carbon double-sided tape was attached onto a metal substrate, and a powder sample was pressed against the tape with a spatula. A spatula whose surface had been cleaned with an organic solvent such as acetone was used as the spatula. A metal perforated mask (hole diameter: 5 mm) was placed over the tape on which the powder sample had been fixed, and the mask was fixed by screwing to produce a measurement sample. The sample was introduced into an XPS apparatus with a transfer vessel so as not to be exposed to the atmosphere, and was subjected to XPS measurement. Detailed measurement conditions of the XPS are described below.

| | |
|---|---|
| XPS apparatus: | VersaProbe II (manufactured by ULVAC-PHI, Inc.) |
| X-ray source: | The measurement was performed with a monochromatized AlKα ray (1,486.6 eV) under a high power condition of 100 W. |
| X-ray diameter: | 100 µm (measured by sweeping in a range of 200 µm×1,200 µm) |
| Pass energy: | 23.5 eV (C1s, S2p, P2p) |
| | 46.95 eV (O1s, Li1s, Br3d, I3d5/2, Cl2p) |
| Step energy: | 0.1 eV (C1s, S2p, P2p) |
| | 0.2 eV (O1s, Li1s, Br3d, I3d5/2, Cl2p) |
| Photoelectron detection angle: | 45° |

The XPS measurement was performed in the following two ways: the surface (outermost surface) of the sample, and a sample inside A obtained by etching its surface layer.

The sample surface was subjected to the measurement immediately after the introduction of the sample into an ultrahigh vacuum (1.0×10⁻⁷ Pa or less) without performance of surface treatment to be described later.

### Sample inside A: Ar monomer ion: 1 kV, 7 mA, 2 mm×2 mm, 60 minutes

### (b) Elemental Ratio C/P of Carbon Element to Phosphorus Element

MultiPak manufactured by ULVAC-PHI, Inc. was used as analysis software. A background was subtracted from each spectrum by the Shirley method, and an elemental ratio C/P was calculated from the resultant area intensity by using a relative sensitivity coefficient. The peak of a carbon element has a peak top around from 278 eV to 298 eV, and the peak of a phosphorus element has a peak top around from 123 eV to 143 eV.

The elemental ratio C/P of the sample surface was the average value of any three points in the measurement portion (diameter: 5 mm). The elemental ratio C/P of the sample inside A was the value of any one point in the measurement portion. In the measurement portion, it is recognized that the spectra of each element are almost the same at a total of three points, that is, a point near the center and two points distant from the center by about 500 µm each.

A C/P change rate R_{A} between the surface and the inside A was calculated from the following equation. ${R}_{A} = \left(elemental ratio C/P of sample inside A\right) / \left(elemental ratio C/P of surface\right)$

The evaluation results of the XPS measurement are shown in Table 1.

**Table 1**

| | State of P₂S₅ | Blending ratio (mass) | | | | (S+P2S5) /C mass ratio | C/P change rate of Ar sputtered surface |
|---|---|---|---|---|---|---|---|
| | | Sulfur | Activated carbon | P₂S₅ | Solid electrolyte | | |
| Example 1 | Molten | 35 | 15 | 20 | 30 (A) | 3.67 | 0.420 |
| Example 2 | Molten | 35 | 15 | 10 | 40 (A) | 3.00 | 0.427 |
| Example 3 | Molten | 35 | 15 | 20 | 30 (B) | 3.67 | 0.405 |
| Comparative Example 1 | Unmixed | 35 | 15 | 0 | 50 (A) | 2. 33 | - |
| Comparative Example 2 | Solid | 35 | 15 | 20 | 30 (A) | 3.67 | 0. 357 |
| Comparative Example 3 | Solid | 35 | 15 | 10 | 40 (A) | 3.00 | Unmeasured |

| | | | | | | | |
|---|---|---|---|---|---|---|---|
| *The column "State of P₂S₅" indicates a state at the time of the mixing of a S-C composite and P₂S₅. *Regarding the parentheses of a solid electrolyte, (A) indicates the solid electrolyte A, and (B) indicates the solid electrolyte B. | | | | | | | |

It was recognized from Table 1 that when the solid electrolyte was mixed into the positive electrode mixture precursor in which P₂S₅ was mixed in a molten state with the S-C composite as in each of Examples, a change in C/P ratio of the sample inside A with respect to the C/P ratio of the sample surface in the composition analysis of the XPS analysis became larger. The change increased as a value probably because the abundances of each component on the outermost surface of, and inside, the sample became different as a result of the promotion of uneven distribution of each component in a depth direction in each of Examples in which P₂S₅ was melted to cover the S-C composite.

### (2) Area Ratio of Each Phosphorus Component by Solid-state ³¹P-NMR Measurement

The area ratio of each phosphorus component was measured by using the following apparatus under the following conditions.

| | |
|---|---|
| Apparatus: | ECZL400G (manufactured by JEOL Ltd.) |
| Magnetic field strength: | 400 MHz |
| Detector: | 3.2 mm AutoMAS probe |
| Solid-state NMR sample tube diameter: | 3.2 mm |
| Observation nucleus: | ³¹P |
| Observation frequency: | 161.835 MHz |
| Measurement temperature: | Room temperature |
| Pulse sequence: | Single pulse |
| 90° pulse length: | 3.4 µs |
| Flip angle: | 45° |
| Number of FID acquisition points: | 1,024 points |
| Waiting time after FID measurement until next pulse application: | 1,500 s |
| Number of revolutions of magic angle spinning (MAS): | 14 kHz |
| Number of scans: | 64 times |
| Measurement range: | from 400 ppm to -300 ppm |
| External reference: | NH₄H₂PO₄ (chemical shift: 1.00 ppm) |

As a data processing condition of the solid-state ³¹P-NMR measurement, an exponential function was used as a window function, and a value within a range in which the full width at half maximum of a peak did not significantly change in accordance with the signal-to-noise ratio of each sample was used as a line broadening value. The actual numerical values of the line broadening value were described in Examples and Comparative Examples. Backward linear prediction was not used.

When peak separation was performed, the resultant solid-state ³¹P-NMR spectrum was analyzed, and a peak to be separated was determined. From each NMR peak (experimental value) on the solid-state ³¹P-NMR spectrum, the calculated value of the NMR peak and the residual sum of squares R2 were calculated by using a non-linear least squares method and performing peak separation using a Gaussian function for the calculation of the separation peak.

The following literatures 1 to 4 were referred to for the assignment of each peak obtained by the waveform separation of the solid-state ³¹P-NMR spectrum.
Literature 1: Christian Dietrich et al., J. Mater. Chem. A, 2017, 5, 18111-18119.
Literature 2: JP 6719037 B1
Literature 3: JP 7297911 B2
Literature 4: JP 2021-510905 A

For example, as disclosed in Literature 1, a peak around 125 ppm obtained as a result of the waveform separation was assigned to PS₃⁻. As disclosed in Literature 2, a peak around 106 ppm was assigned to P₂S₆⁴⁻ (amorphous), a peak around 91 ppm was assigned to P₂S₇⁴⁻ (amorphous), and a peak around -5 ppm was assigned to P₂O₇. As disclosed in Literature 3, a peak around from 50 ppm to 60 ppm was assigned to P₂S₅. P₂S₅ in the assignment may generally appear as the total value of a P₄S₁₀ skeleton, which is the main component of phosphorus pentasulfide, a P₄S₉ skeleton, and the like. As disclosed in Literature 4, a peak around -5 ppm was assigned to P₂O₇. As peaks that were not able to be assigned in Literatures 1 to 4, peaks with unknown assignment were observed around 145 ppm and around 101 ppm in Example 1, and around 145 ppm and at 86 ppm in Comparative Example 2.

In the composition calculation of each composition obtained by the waveform separation of the solid-state ³¹P-NMR spectrum, the ratio of each component shown below was calculated as a percentage by using the area value of a separated peak. No spinning sideband peak was used for the composition calculation of each component. The area ratio (%) of each peak with respect to the total area of eight peaks shown in Table 2 was calculated. The results are shown in Table 2. The results of the waveform separation of the solid-state ³¹P-NMR spectra of Example 1 and Comparative Example 2 are shown in FIG. 9 (line broadening value: 100 Hz) and FIG. 10 (line broadening value: 100 Hz).

**Table 2**

| Phosphorus component | Example 1 | Comparative Example 2 |
|---|---|---|
| Unknown | 3.9% | 4.1% |
| PS₃⁻ | 11.5% | 10.9% |
| P₂S₆⁴⁻ | 31.6% | 58.9% |
| Unknown | 11.1% | 0% |
| P₂S₇⁴⁻ | 40.9% | 20.2% |
| Unknown | 0% | 3.0% |
| P₂S₅ | 1.0% | 1.4% |
| P₂O₇ | 0% | 1.5% |

It was recognized from Table 2 that when P₂S₅ was mixed in a molten state with the S-C composite as in Example, as the composition of a precursor to be obtained, while the total value of the proportions of the peak components of P₂S₅, P₂S₆⁴⁻, and PS₃⁻ reduced, the proportion of P₂S₇⁴⁻ increased, and a new peak having an intermediate chemical shift between P₂S₆⁴⁻ and P₂S₇⁴⁻ appeared around 101.0 ppm. It was recognized that Example and Comparative Example were each substantially free of P₂S₅ and PS₄³⁻ serving as one main component of the solid electrolyte. This is probably because both of them reacted and changed at the time of their mixing. In Example, a reaction with a sulfide-based solid electrolyte generally having large amounts of PS₄³⁻, P₂S₇⁴⁻, and the like changed probably because the molten P₂S₅ component partially reacted with sulfur in the S-C composite to change into P₂S₆⁴⁻, PS₃⁻, and the like, for example, inside, or near the surface of, the activated carbon. Specifically, it is conceivable that P₂S₆⁴⁻, PS₃⁻, and the like considered to be present in the precursor of Example kept the alteration of the sulfide-based solid electrolyte generally having large amounts of high-sulfur ratio components, such as PS₄³⁻ and P₂S₇⁴⁻, smaller than P₂S₅ present at the time of mixing in Comparative Example did, and hence P₂S₇⁴⁻ and an unknown structure having an intermediate chemical shift between P₂S₆⁴⁻ and P₂S₇⁴⁻ became relatively large in amount, and P₂S₅, P₂S₆⁴⁻, and PS₃⁻ became relatively small in amount. This is probably because the fact that the molten P₂S₅ covered the S-C composite to form a strong interface contributed to the reaction at the time of the mixing of the solid electrolyte with the precursor. In other words, in Example, as a result of the formation of a strong interface by the covering of the S-C composite with the modified product of the molten P₂S₅, the total value of the proportions of the peak components of P₂S₅, P₂S₆⁴⁻, and PS₃⁻ became a constant value (e.g., 68% or less), the proportion of the peak component of P₂S₇⁴⁻ became a constant value (e.g., 23%) or more, and a new peak component having an intermediate chemical shift between P₂S₆⁴⁻ and P₂S₇⁴⁻ appeared around 101.0 ppm.

### [All-solid-state Lithium Ion Battery]

All-solid-state lithium ion batteries were produced as described below by using the positive electrode mixtures produced in Examples and Comparative Examples, and were evaluated for their battery characteristics (charge-discharge characteristics).

### Production of Negative Electrode Mixture

A negative electrode mixture (also referred to as "lithium titanate (LTO) negative electrode mixture") was obtained by mixing lithium titanate ("LT-112" manufactured by Ishihara Sangyo Kaisha, Ltd.), a conductive additive ("Li-100" manufactured by Denka Company Limited, powdery acetylene black), and the solid electrolyte B in a mortar at a mass ratio of 60:5:35 for 5 minutes.

### Production of Lithium Ion Battery

100 mg of the solid electrolyte A was loaded into a MACOR cylinder having a diameter of 10 mm and subjected to pressure molding to form a solid electrolyte layer (layer of the solid electrolyte A).

Next, each of the positive electrode mixture powders was loaded onto one pressing surface of the solid electrolyte layer so that its amount became 10 mg, followed by pressure molding again.

Next, the LTO negative electrode mixture was loaded onto the other pressing surface (pressing surface opposite to the positive electrode) of the solid electrolyte layer so that its amount became 166 mg, followed by pressing. Li foil having a diameter of 9 mm and a thickness of 0.1 mm was loaded thereon, and the resultant was pressed again to produce a lithium ion battery.

### ·Charge-discharge Test

A constant-current charge-discharge test was performed on the lithium ion battery using the positive electrode mixture of each of Examples and Comparative Examples. The voltage range of the constant-current charge-discharge test was set to from -0.4 V to 1.3 V, and the test was performed while current values were set as shown in Table 3 at a C rate determined on the basis of a theoretical capacity of 1,672 mAh/g for sulfur. Regarding charging, CC-CV charging was performed, in which constant-voltage charging with 0.02 C as a termination condition was performed after constant-current charging, and regarding discharging, constant-current discharging (CC discharging) was performed. The results are shown in Table 4.

**Table 3**

| Number of cycles | Discharging (CC) | Charging (CC-CV) |
|---|---|---|
| 1 | 0.05C | 0.05C |
| 2 | 0.05C | 0.05C |
| 3 | 0.05C | 0.1C |
| 4 | 0.1C | 0.1C |
| 5 | 0.2C | 0.1C |
| 6 | 0.33C | 0.1C |
| 7 | 0.5C | 0.1C |
| 8 | 1C | 0.1C |
| 9 | 2C | 0.1C |

**Table 4**

| | Discharge capacity (mAh/g) | | | | | | |
|---|---|---|---|---|---|---|---|
| | @0. 05C | @0. 1C | @0. 2C | @0. 33C | @0. 5C | @1C | @2C |
| Example 1 | 2069 | 1858 | 1752 | 1629 | 1438 | 826 | 289 |
| Example 2 | 1860 | 1812 | 1732 | 1545 | 1223 | 551 | 138 |
| Example 3 | 1925 | 1860 | 1771 | 1576 | 1189 | 485 | 130 |
| Comparative Example 1 | 1896 | 1826 | 1716 | 1384 | 951 | 392 | 100 |
| Comparative Example 2 | 1588 | 1415 | 1340 | 1269 | 1127 | 647 | 181 |
| Comparative Example 3 | 1680 | 1577 | 1512 | 1396 | 1223 | 716 | 241 |

It is recognized that Examples each have higher capacities at both of a low rate and a high rate than those of Comparative Examples. For example, Comparative Example 1 has a low capacity at a high rate, and Comparative Examples 2 and 3 each have a low capacity at a low rate. Improvements in charge-discharge characteristics were shown in each of Examples that underwent the melting of P₂S₅ (ion conductor). In each of Examples, excellent charge-discharge characteristics were obtained probably because of a strong interface and a favorable ion conduction path formed by the melt-compositing of P₂S₅.

### Industrial Applicability

The positive electrode mixture of the present invention is suitable as a constituent material for a lithium ion battery. In addition, the lithium ion battery including the positive electrode mixture of the present invention is suitably used as, for example, a battery to be used in information-related equipment and communication equipment, such as a personal computer, a video camera, and a cellular phone, and a vehicle such as an electric vehicle.

Some embodiments and/or Examples of the present invention have been described in detail in the foregoing, but a person skilled in the art could easily make various modifications to these illustrative embodiments and/or Examples without substantially departing from the novel teachings and effects of the present invention. Accordingly, those various modifications are encompassed in the scope of the present invention.

The literatures described herein and the contents of the application on the basis of which the present application claims Paris convention priority are incorporated herein by reference in their entirety.

The phrase "from "x" to "y"" as used herein represents the numerical range of ""x" or more and "y" or less". Upper limits and lower limits described for numerical ranges may be freely combined.

In addition, among the individual embodiments of the aspects according to the present invention, two or more embodiments that do not contradict each other may be combined, and an embodiment in which two or more embodiments are combined is also an embodiment of the aspects according to the present invention.

## Claims

1. A positive electrode mixture comprising a sulfur-based active material; a carbon material having pores; at least one of an ion conductor containing a phosphorus element and a modified product of the ion conductor; and a solid electrolyte,
wherein a rate of change in elemental ratio C/P of a carbon element to a phosphorus element by surface elemental analysis thereof in X-ray photoelectron spectroscopy before and after Ar sputtering treatment is 0.365 or more and 1.00 or less.

2. The positive electrode mixture according to claim 1, wherein the rate of change in elemental ratio C/P is 0.380 or more and 0.950 or less.

3. The positive electrode mixture according to claim 1 or 2, which has a peak having a peak top around 101.0 ppm in solid-state ³¹P-NMR measurement thereof.

4. The positive electrode mixture according to claim 1, wherein the ion conductor comprises phosphorus sulfide, and
a total area of peaks of P₂S₅, P₂S₆⁴⁻, and PS₃⁻ is 68% or less of an entirety in solid-state ³¹P-NMR measurement thereof.

5. The positive electrode mixture according to claim 1, wherein the ion conductor comprises phosphorus sulfide, and
an area of a peak of P₂S₇⁴⁻ is 23% or more of an entirety in solid-state ³¹P-NMR measurement thereof.

6. The positive electrode mixture according to any one of claims 1 to 5, wherein the ion conductor has a melting point of from 130°C to 450°C.

7. The positive electrode mixture according to any one of claims 1 to 6, wherein the ion conductor comprises a lithium ion conductive material containing a phosphorus element, and one or more kinds of elements selected from lithium, boron, sulfur, and oxygen, or a precursor thereof.

8. The positive electrode mixture according to any one of claims 1 to 7, wherein the ion conductor comprises phosphorus sulfide.

9. The positive electrode mixture according to any one of claims 1 to 8, wherein the ion conductor comprises phosphorus pentasulfide.

10. The positive electrode mixture according to any one of claims 1 to 9, wherein the sulfur-based active material comprises elemental sulfur.

11. The positive electrode mixture according to any one of claims 1 to 10, wherein a mass ratio of a total of the sulfur-based active material, and the ion conductor containing a phosphorus element and the modified product of the ion conductor is smaller than 5.00 to the carbon material.

12. A method of producing a positive electrode mixture comprising: mixing at least one of a composite or a mixture of a sulfur-based active material and a carbon material having pores with an ion conductor in a molten state to prepare a positive electrode mixture precursor; and
mixing and pulverizing the positive electrode mixture precursor and a crystalline solid electrolyte under a condition where crystallinity of the solid electrolyte is reduced to advance amorphization thereof, to thereby produce the positive electrode mixture.

13. The method of producing it according to claim 12, wherein the composite of the sulfur-based active material and the carbon material having pores is mixed with the ion conductor in a molten state.

14. The method of producing it according to claim 12 or 13, wherein the ion conductor has a melting point of from 130°C to 450°C.

15. The method of producing it according to any one of claims 12 to 14, wherein the ion conductor comprises a lithium ion conductive material containing a phosphorus element, and one or more kinds of elements selected from lithium, boron, sulfur, and oxygen, or a precursor thereof.

16. The method of producing it according to any one of claims 12 to 15, wherein the ion conductor is phosphorus sulfide.

17. The method of producing it according to any one of claims 12 to 16, wherein the ion conductor comprises phosphorus pentasulfide.

18. The method of producing it according to any one of claims 12 to 17, wherein the sulfur-based active material comprises elemental sulfur.

19. The method of producing it according to any one of claims 12 to 18, wherein a mass ratio among the sulfur-based active material, the carbon material, and the ion conductor satisfies the following relationship:$\left(sulfur-based active material+carbon material\right) : ion conductor = 50 : 1 to 80 .$

20. The method of producing it according to any one of claims 12 to 19, wherein a mass ratio of a total of the sulfur-based active material and the ion conductor is smaller than 5.00 to the carbon material.

21. A positive electrode comprising the positive electrode mixture according to any one of claims 1 to 11.

22. A lithium ion battery comprising the positive electrode mixture according to any one of claims 1 to 11, or the positive electrode according to claim 21.
